# EUROPÄISCHE PATENTSCHRIFT

(11) **EP 0 631 904 B1**
(45) Veröffentlichungstag und Bekanntmachung des Hinweises auf die Patenterteilung: **17.09.1997**
(21) Anmeldenummer: 94109536.6
(22) Anmeldetag: 21.06.1994
(51) Int. Cl.: B60R 9/04

(54) **Dachreling für Fahrzeuge**
Roof rails for vehicles
Rails de toit pour véhicules

(30) Priorität: 29.06.1993 DE 4321537
(43) Veröffentlichungstag der Anmeldung: 04.01.1995
(73) Patentinhaber: Happich Fahrzeug-Dachsysteme GmbH, D-42285 Wuppertal (DE)
(72) Erfinder: Fisch, Fritz, D-42111 Wuppertal (DE); Rehm, Ulrich, D-58089 Hagen (DE)

(56) Entgegenhaltungen:
- DE-A- 3 230 346
- DE-A- 3 539 449
- FR-A- 2 648 093

## Beschreibung

Die Erfindung bezieht sich auf eine Dachreling für Fahrzeuge mit einem Holm, einem an jedem Holmende angeordneten als Kunststoff-Spritzgußkörper ausgebildeten Stützfuß zum Abstützen des Holms am zugehörigen Fahrzeugdach, einem im Kunststoff-Spritzgußkörper eingelagerten Verstärkungselement, einem aus dem Kunststoff-Spritzgußkörper einendig heraustretenden, starr mit dem Verstärkungselement verbundenen Befestigungsbolzen zum Herstellen einer Verbindung zwischen dem Stützfuß und dem Fahrzeugdach und einem aus dem Kunststoff-Spritzgußkörper anderendig heraustretenden, starr mit dem Verstärkungselement verbundenen Steckbolzen zum Herstellen einer Verbindung zwischen dem Stützfuß und dem Holm.

Eine Dachreling für Fahrzeuge besteht im allgemeinen aus zwei Holmen, die entlang der Seitenränder der Dachfläche verlaufen und zumindest an ihren Enden von auf der Dachfläche aufsitzenden Stützfüßen getragen werden. An den Holmen können Querträger zur Lastenaufnahme angebracht werden. Nachteilig bei den herkömmlichen Dachrelings sind die zu hohen Herstellungskosten der Stützfüße und insbesondere ihr hohes Gewicht, weil sie in der Regel als massive Metallkörper ausgebildet sind.

Eine Dachreling der eingangs genannten Art ist durch die DE-A-3 539 449 bekanntgeworden. Diese Dachreling zeigt einen Stützfuß, der als Kunststoff-Spritzgußkörper ausgebildet ist und ein eingelagertes Verstärkungselement aufweist. Das Verstärkungselement besteht aus einem gebogenen Rundbolzen, der zur Befestigung des Stützfußes an einem Untergestell mit einem Gewindezapfen aus dem Stützfuß herausragt, während auch an der Anschlußseite des Holms zur Befestigung desselben am Stützfuß ein Gewindezapfen rausragt, auf den der mit einem Innengewinde versehene Holm aufschraubbar ist. Es erscheint zumindest zweifelhaft, ob ein im Stützfuß eingelagerter Rundbolzen ausreicht, um den Stabilitätsanforderungen, die zur Abstützung einer Dachlast erforderlich sind, zu genügen. Zudem erscheint es äußerst aufwendig, für eine Dachreling einen Holm einsetzen zu müssen, der an seinen Endbereichen eingearbeitete Innengewinde aufweisen muß.

Aus der DE-A-3 230 346 ist zudem ein Stützfuß zum Abstützen eines Holms einer Dachreling bekanntgeworden, der zwei Tragkörperteile aufweist, von denen mindestens einer innere Aussparungen besitzt, die alle zur gleichen in Stützfußlängsrichtung verlaufenden Längsseite dieses Tragkörperteils hin offen sind, wobei diese offene Seite durch den anderen Tragkörperteil geschlossen ist. Dieser Stützfuß kann zum Bilden einer Ummantelung mit Kunststoff umspritzt sein.

Ausgehend von einer Dachreling der eingangs genannten Art ist es nun Aufgabe der vorliegenden Erfindung, diese so zu verbessern, daß sie sich durch eine vereinfachte Herstellbarkeit und insbesondere Gewichtsverminderung bei vergleichsweise hoher Festigkeit auszeichnet.

Zur Lösung dieser Aufgabe ist erfindungsgemäß vorgesehen, daß das Verstärkungselement aus einem flachen Blechteil besteht, das im verkleinerten Maßstab der Kontur des Kunststoff-Spritzgußkörpers angepaßt ist, der Befestigungsbolzen eine Schlitzöffnung und auch der Steckbolzen eine Schlitzöffnung als Steckaufnahme für das Verstärkungselement aufweist, das Verstärkungselement mit dem Befestigungsbolzen und dem Steckbolzen verliebt, verschweiß, verlötet oder vernietet ist und die Breitseiten des Verstärkungselements parallel zu den Breitseiten des Stützfußes ausgerichtet sind.

Durch diese erfindungsgemäßen Maßnahmen wird bei den Stützfüßen eine beträchtliche Gewichtsreduktion erreicht, und zwar ohne die Funktionstüchtigkeit in Frage stellender Festigkeitseinbußen. Die Verbindung zum Dach und zum Holm wird über die Bolzen aus metallischem Material, vorzugsweise Stahl sichergestellt, während die Festigkeit der Stützfüße selbst durch das eingelagerte, die Bolzen miteinander verbindende Verstärkungselement gewährleistet wird. Bei der Herstellung der Stützfüße läßt sich auch das an sich bekannte Gasinnendruckverfahren anwenden, mit dem innerhalb der Stützfüße zumindest ein der weiteren Gewichtsreduzierung dienender Hohlraum ausgebildet werden kann. Als Verstärkungselement kommt mit Vorteil ein Blechstanzteil zum Einsatz, weil ein solches auch wegen einer Ausrichtung den Festigkeitsanforderungen vollauf zu genügen vermag und zudem noch besonders preiswert zur Verfügung gestellt werden kann. Aufgrund der Einlagerung des Verstärkungselements in das Stützfußmaterial können Korrosionsprobleme unbeachtet bleiben. Die Maßnahme das Verstärkungselement starr mit den Bolzen zu verbinden dient zur Verbesserung der Festigkeit und macht es möglich, die Bolzen und das Verstärkungselement zu einem einzigen Einlageteil zusammenzufassen, was einfach zu handhaben und zu umspritzen ist. Für die erwähnte Verbindung ist das Verstärkungselement mit den Bolzen verliebt, verschweißt, verlötet oder vernietet. Die im Stützfuß eingelagerten Bereiche des Befestigungsbolzens und des Steckbolzens weisen Schlitzöffnungen als Steckaufnahmen für das Verstärkungselement auf. Die Teile können somit einfach von Hand zusammengesteckt, z. B. in eine Schweißvorrichtung eingelegt und hier starr miteinander verbunden werden. Zudem ist durch diese Maßnahmen sichergestellt, daß sich das Verstärkungselement stets fußmittig befindet und mit der Längsmittenachse des jeweiligen Stützfußes zusammenfällt.

Die Erfindung läßt sich weiterhin mit besonderem Vorteil dadurch ausgestalten, daß der Stützfuß an dem einen Holmende mit dem Stützfuß an dem anderen Holmende einstückig ausgebildet ist, wobei sich innerhalb des Holms ein mit Kunststoffmaterial umspritzter, von den Steckbolzen aufgenommener Rohrkörper befindet. Diese Maßnahme bietet den besonderen Vorteil, eine Dachreling aus einem Guß zur Verfügung stellen zu können, die keinerlei Trennfugen, Ansätze und dergleichen mehr aufweist.

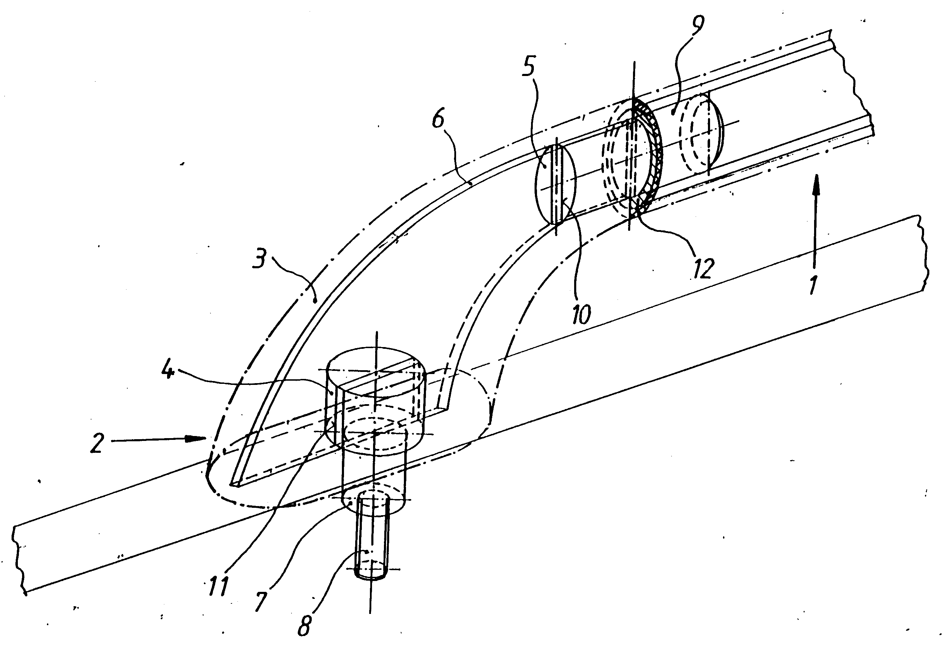

Ein Ausführungsbeispiel der Erfindung wird im folgenden anhand der Zeichnung näher erläutert.

Die Zeichnung zeigt einen der beiden Endbereiche einer Dachreling mit einem Holm 1 und einem Stützfuß 2. Der andere, nicht gezeigte Endbereich besitzt eine mit dem gezeigten Endbereich übereinstimmende Ausbildung.

Der Stützfuß 2 besteht aus einem aus Kunststoffmaterial gespritzten Formkörper 3, in dem ein Befestigungsbolzen 4 und ein Steckbolzen 5 sowie ein die Bolzen 4 und 5 starr miteinander verbindendes Verstärkungselement 6 durch Umspritzen eingelagert sind. Der Befestigungsbolzen 4 ist einerseits mit einem verdickten Kopfbereich im Stützfuß 2 eingelagert tritt andererseits aber aus der Auflagefläche des Stützfußes 2 mit einem Schaft 7 heraus, an dem sich in axialer Verlängerung noch ein Gewindeschaft 8 anschließt. Schaft 7 und Gewindeschaft 8 dienen zur Befestigung der Dachreling auf einem Fahrzeugdach, wobei die Befestigungsanordnung im einzelnen bekannt ist und daher hier nicht mehr erläutert zu werden braucht.

Ebenso wie der Befestigungsbolzen 4 ist auch der Steckbolzen 5 nur bereichsweise im Formkörper 3 des Stützfußes 2 eingelagert und überragt diesen mit einem axialen Endbereich 9, über dem die Steckverbindung mit dem Holm 1 herstellbar ist.

Jeder der Bolzen 4 und 5 ist über einen im Formkörper 3 eingelagerten Axialbereich geschlitzt, wobei die Schlitzöffnungen 10, 11 als Steckaufnahmen für das Verstärkungselement 6 vorgesehen sind, das mit den entsprechenden Endbereichen in die Schlitzöffnungen 10, 11 eingreift. Dabei besteht das Verstärkungselement 6 zwecksmäßigerweise aus einem Blechzuschnitt, dessen Kontur im verkleinerten Maßstab der des Formkörpers 3 angepaßt ist. Eine starre Verbindung zwischen den Bolzen 4 und 5 und dem Verstärkungselement 6 kann in einfacher Weise z.B. durch Schweißen oder Löten hergestellt werden.

Es ist denkbar, die Stützfüße 2 mit den darin eingelagerten Teilen als separate Bauteile herzustellen und diese jeweils durch eine Steckmontage mit dem Holm 1 zu verbinden. Eine andere äußerst interessante Möglichkeit besteht darin, den Stützfuß 2 an dem einen Holmende mit dem Stützfuß 2 am anderen Holmende einstückig auszubilden. In diesem Fall ist es sinnvoll, auf die Steckbolzen 5 zweier Stützfußeinlagen einen Rohrkörper 12, der z. B. aus Aluminium besteht, aufzustecken und die aus zwei Stützfußeinlagen und dem Rohrkörper 12 bestehende Baueinheit in das Formnest einer Spritzgußmaschine einzulegen und komplett mit Kunststoffmaterial zu umspritzen. Der Formkörper 3 erstreckt sich dann vom ersten Stützfuß 2 über den Holm 1 bis zum zweiten Stützfuß, wobei ggf. auch eine Mittelstütze einstückig mit angeformt werden kann.

## Patentansprüche

1. Dachreling für Fahrzeuge mit
- einem Holm (1),
- einem an jedem Holmende angeordneten als Kunststoff-Spritzgußkörper (3) ausgebildeten Stützfuß (2) zum Abstützen des Holms (1) am zugehörigen Fahrzeugdach,
- einem im Kunststoff-Spritzgußkörper (3) eingelagerten Verstärkungselement (6),
- einem aus dem Kunststoff-Spritzgußkörper (3) einendig heraustretenden, starr mit dem Verstärkungselement (6) verbundenen Befestigungsbolzen (4) zum Herstellen einer Verbindung zwischen dem Stützfuß (2) und dem Fahrzeugdach und
- einem aus dem Kunststoff-Spritzgußkörper (3) anderendig heraustretenden, starr mit dem Verstärkungselement (6) verbundenen Steckbolzen (5) zum Herstellen einer Verbindung zwischen dem Stützfuß (2) und dem Holm (1),
dadurch gekennzeichnet, daß
- das Verstärkungselement (6) aus einem flachen Blechteil besteht, das im verkleinerten Maßstab der Kontur des Kunststoff-Spritzgußkörpers (3) angepaßt ist,
- der Befestigungsbolzen (4) eine Schlitzöffnung (11) und auch der Steckbolzen (5) eine Schlitzöffnung (10) als Steckaufnahme für das Verstärkungselement (6) aufweist,
- das Verstärkungselement (6) mit dem Befestigungsbolzen (4) und dem Steckbolzen (5) verliebt, verschweißt, verlötet oder vernietet ist und
- die Breitseiten des Verstärkungselements (6) parallel zu den Breitseiten des Stützfußes (2) ausgerichtet sind.

2. Dachreling nach Anspruch 1, dadurch gekennzeichnet, daß der Stützfuß (2) an dem einen Holmende mit dem Stützfuß (2) an dem anderen Holmende einstückig ausgebildet ist, wobei sich innerhalb des Holms (1) ein mit Kunststoffmaterial umspritzter, von den Steckbolzen (5) aufgenommener Rohrkörper (12) befindet.

## Claims

1. Roof rail for vehicles, having
- a beam (1),
- a supporting foot (2), designed as an injection-moulded plastic body (3), arranged at each end of the beam, for supporting the beam (1) on the associated vehicle roof,
- a reinforcing element (6) which is embedded in the injection-moulded plastic body (3),
- a fastening pin (4) which emerges from the injection-moulded plastic body (3) at one end, is connected rigidly to the reinforcing element (6) and is intended for producing a connection between the supporting foot (2) and the vehicle roof, and
- a socket pin (5) which emerges from the injection-moulded plastic body (3) at the other end, is connected rigidly to the reinforcing element (6) and is intended for producing a connection between the supporting foot (2) and the beam (1),
characterized in that
- the reinforcing element (6) is composed of flat sheet-metal part which is matched on a reduced scale to the contour of the injection-moulded plastic body (3),
- the fastening pin (4) has a slot opening (11) and also the socket pin (5) has a slot opening (10) as a plug-in retainer for the reinforcing element (6),
- the reinforcing element (6) is bonded, welded, soldered or riveted to the fastening pin (4) and the socket pin (5), and
- the broad sides of the reinforcing element (6) are aligned parallel to the broad sides of the supporting foot (2).

2. Roof rail according to Claim 1, characterized in that the supporting foot (2) at one end of the beam is designed such that it is integral with the supporting foot (2) at the other end of the beam, a tubular body (12) which is extrusion-coated with plastic material and is held by the socket pins (5) being located within the beam (1).

## Revendications

1. Rail de toit pour véhicule comprenant :
- une branche (1),
- un pied d'appui (2) constitué par une pièce en matière plastique injectée (3) prévue à chaque extrémité de la branche (1) pour appuyer la branche (1) sur le toit du véhicule correspondant,
- un élément de renforcement (6) inséré dans la pièce injectée en matière plastique (3),
- un goujon de fixation (4) relié rigidement à l'élément de renforcement (6) et sortant par une extrémité de la pièce en matière plastique injectée (3), pour réaliser une liaison entre le pied (2) et le toit du véhicule et
- un goujon d'enfichage (5) relié rigidement à l'élément de renforcement (6) et sortant de l'autre extrémité de la pièce injectée en matière plastique (3), pour réaliser une liaison entre le pied (2) et la branche (1),
caractérisé en ce que
- l'élément de renforcement (6) est constitué d'une pièce en tôle, plate, adaptée à échelle réduite au contour de la pièce injectée en matière plastique (3),
- le goujon de fixation (4) comporte une ouverture en forme de fente (11) de même que le goujon d'enfichage (5) comporte une ouverture en forme de fente (10) comme logement d'enfichage pour l'élément de renforcement (6),
- l'élément de renforcement (6) est collé, soudé, brasé ou riveté au goujon d'enfichage (5) et
- les côtés large de l'élément de renforcement (6) sont alignés parallèlement aux côtés larges du pied d'appui (2).

2. Rail de toit selon la revendication 1,
caractérisé en ce que
le pied d'appui (2) d'une extrémité de la branche est réalisé en une seule pièce avec le pied d'appui (2) de l'autre extrémité de la branche et à l'intérieur de la branche (1) se trouve un corps tubulaire (12) reçu par les goujons d'enfichage (5) et qui est entouré par injection de matière plastique.
